# EUROPEAN PATENT SPECIFICATION

(11) **EP 1 843 550 B1**
(45) Date of publication and mention of the grant of the patent: **21.12.2011**
(21) Application number: 06300327.1
(22) Date of filing: 05.04.2006
(51) Int. Cl.: H04L 29/08, H04L 29/06, H04L 12/28

(54) **Transport medium selection to optimize device operation**
Auswahl des Transportmediums zur Optimierung des Betriebs eines Gerätes
Sélection de media de transport pour l'optimisation d'operation d'un appareil

(43) Date of publication of application: 10.10.2007
(73) Proprietor: Motorola Mobility, Inc., Libertyville, IL 60048 (US)
(72) Inventor: Proust, Caroline, 31500 Toulouse (FR); Pince, Julien, 31500 Toulouse (FR)
(74) Representative: Delumeau, François Guy

(56) References cited:
- WO-A-2006/018712
- US-A1- 2004 203 851
- US-A1- 2004 260 800
- US-A1- 2006 067 489

## Description

### FIELD

This application relates generally to networking and more specifically to devices that exchange data through the use of network protocols.

### BACKGROUND

Consumers can use a wide array of devices to exchange data with each other. Some devices are mobile (e.g. mobile phones, personal digital assistants, portable media players, etc.) while others are fixed (personal computers, media servers, etc.). Some devices communicate via land lines while others communicate primarily through wireless technology. To exchange data, however, these devices must have some means of setting up and managing communication links with other devices.

Accordingly, developers have created a number of network protocols to help manage connections between devices. Examples include, but are not limited to, Universal Plug and Play (UPnP®) and Bonjour®. A network protocol typically includes different a set of rules by which devices advertise themselves and their capabilities, discover other devices and their capabilities, establish connections with other devices, and manage these connections. For example, UPnP includes a discovery phase during which a device entering a network can advertise its presence to other devices. UPnP also includes a description phase during which devices learn about each other's capabilities (also called "services"). Other protocols include similar phases, although they may be referred to by different terminology.

Some examples describing devices exchanging data with each other are given by the prior art documents US 2004203851, WO 2006018712, US 2006067489 and US 2004260800.

Using mobile devices to exchange data presents some problems. For instance, most mobile devices run on batteries. Yet, to be fully comprised of a network's configuration and to be fully aware of the services offered by the network, devices must continually listen and provide discovery messages to the network. For a mobile device, this limits battery life. Further, although a device might have the capability to share data using a given service, the device might have limitations that do not make it worthwhile to do so. For example, a device might have file sharing capability, but not have a physical interface that is fast enough or reliable enough to send large files. If another device were to request a large file from such a device, the performance of both devices could be degraded because it would take too long for the file transfer to complete. Accordingly, devices are needed that can perform selective transport medium selection to optimize device operation.

### SUMMARY

In one embodiment, a method of transport medium selection is provided. A first device and a second device are provided. Device descriptions are exchanged between the first device and the second device. The device description identifies available services and all available transport mediums for each service. At least one of the available services is chosen to exchange data between the first device and the second device, and one of the available transport mediums is selected to exchange data between the first device and the second device.

In one embodiment, the device descriptions are exchanged by sending a first device description from the first device to the second device that identifies all services that are available on the first device and sending a second device description from the second device to the first device that identifies all services that are available on the second device. All transport mediums that are available for use with each service on the first device are identified, and all transport mediums that are available for use with each service on the second device are identified.

In one embodiment, a device description is created for each device by either designating all transport mediums present on device as available for use with each service on the device or designating only transport mediums present on the device that meet predetermined criteria as available for use with each service on the device.

In one embodiment, at least one parameter related to at least one of power consumption, throughput, and quality of service is selected and the predetermined criteria is set through employment of the at least one parameter.

In one embodiment, an initial description is created for each device in accordance with the Universal Plug and Play specification, and a descriptor is added to each initial description that identifies all available transport mediums for each service identified in the initial description.

In one embodiment, choosing at least one of the available services includes choosing a service on the first device and choosing a service on the second device. One of the available transport mediums is selected through making a determination that a plurality of transport mediums available for the service chosen on the first device match a plurality of transport mediums available for the service chosen on the second device and employing predetermined criteria to select one of the plurality of available transport mediums.

In one embodiment, the predetermined criteria is selected from at least one of: a first available matching transport medium of the plurality of available transport mediums, a transport medium that will minimize power consumption relative to the other transport mediums, a transport medium that will maximize throughput of data exchanged between the first device and the second device, and a transport medium that will maximize quality of service between the first device and the second device.

In on embodiment, a method of identifying transport capabilities to a network is provided. Communication is initiated with at least one device on the network. A device description is broadcast to the at least one device. The device description includes at least one service available to the network and all transport mediums available for use with the at least one service.

In one embodiment, the device description is broadcast such that it includes a plurality of services that are available to the at least one device and a list of transport mediums available for use with each of the plurality of services.

In one embodiment, a device description is received from the at least one device on the network. The received device description includes at least one service available from the at least one device and all transport mediums available for use with the at least one service.

In one embodiment, a plurality of services available from the at least one device and all transport mediums available for use with each of the services are received. A service is chosen to exchange data with the at least one device. Predetermined criteria is determined to select one of the available transport mediums and one of the transport mediums is selected based on the predetermined criteria.

In one embodiment, a method of selecting a protocol for use in exchanging data with a device on a network is provided. A device description is received from the device, the device description includes at least one service that can be used to exchange data with the device, and for each service included in the device description, all available transport mediums for use with the service. A service is chosen to exchange data with the second device and an available transport medium is selected for use with service.

In one embodiment, an available transport medium is selected by receiving input from a user and selecting the transport medium in accordance with the user input. In one embodiment, an available transport medium is selected by setting predetermined criteria for selecting a transport medium and employing the predetermined criteria to select the transport medium.

In one embodiment, the predetermined criteria is set by selecting at least one parameter related to at least one of power consumption, throughput, and quality of service and setting the predetermined criteria through employment of the at least one parameter.

In one embodiment, a wireless device on a network is provided. The device includes a processor, a transceiver, and a memory component that includes a description of the device. The description includes at least one service that is available for use by other devices on the network, and for each service, a list of all transport mediums that are available for use with the service.

In one embodiment, an article is provided. The article includes a computer-readable signal-bearing medium. Logic in the medium provides a description of a device on a network. The description includes each service available to other devices on the network and available transport mediums for use with each service.

### BRIEF DESCRIPTION OF THE DRAWINGS

For the purpose of facilitating an understanding of the subject matter sought to be protected, there are illustrative embodiments in the accompanying drawing, from an inspection of which, when considered in connection with the following description and claims, the subject matter sought to be protected, its construction and operation, and many of its advantages should be readily understood and appreciated
Fig. 1 depicts a plurality of devices shown in communication, either directly or indirectly through a network.
Fig. 2 is a block diagram depicting exemplary components of two devices, shown in Fig. 1, while in communication with each other.
Fig. 3 is a flowchart depicting an exemplary process for transport medium selection.
Fig. 4 is a device description file with the service list provided therein shown with emphasis.
Fig. 5 is a service list that includes identifies all transport mediums for each service defined therein.

### DETAILED DESCRIPTION

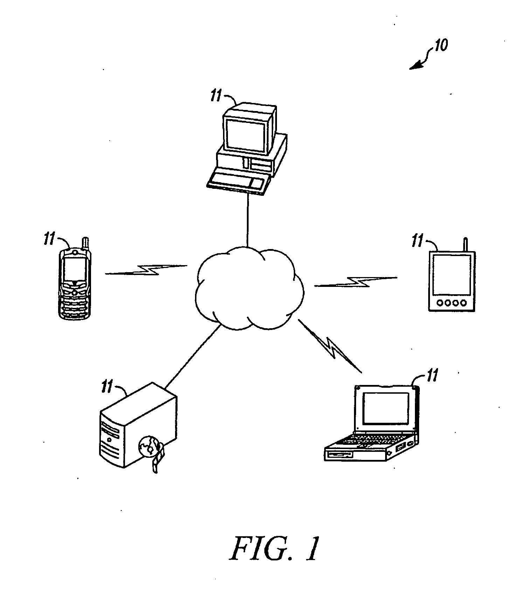

Referring to FIG. 1 an exemplary system 10 is shown for illustrative purposes. System 10, in one example comprises one more devices 11. Exemplary devices 11 include, but are not limited to, personal computers, laptops, personal digital assistants ("PDA"), a mobile telephones, media servers, media players, workstations, file servers, mainframes, and so on. A device 11 can also be a removable component of the one of the aforementioned devices or a combination of one of the aforementioned devices.

Referring to Fig. 1, the devices 11 communicate with each other directly or indirectly. In Fig. 1, network 20 is shown as a perforated line to convey that devices 11 can communicate with each other directly or through network 20. The network 20 can be any network that allows devices 11 to communicate (e.g., a Local Area Network ("LAN"), a Wide Area Network ("WAN"), a wireless LAN, a wireless WAN, the Internet, a wireless telephone network, etc.). Network 20 can also be a combination of the above recited networks. Moreover, it is possible that some devices 11 could communicate with each other directly while others communicate over the network 20. The devices 11 each include one or more communication interfaces, which can be land based (e.g., T1, DSL, Cable, POTS) or wireless (e.g. Bluetooth, IrDA, WiFi, etc.) The communications links between devices 11 can either be secure or non-secure.

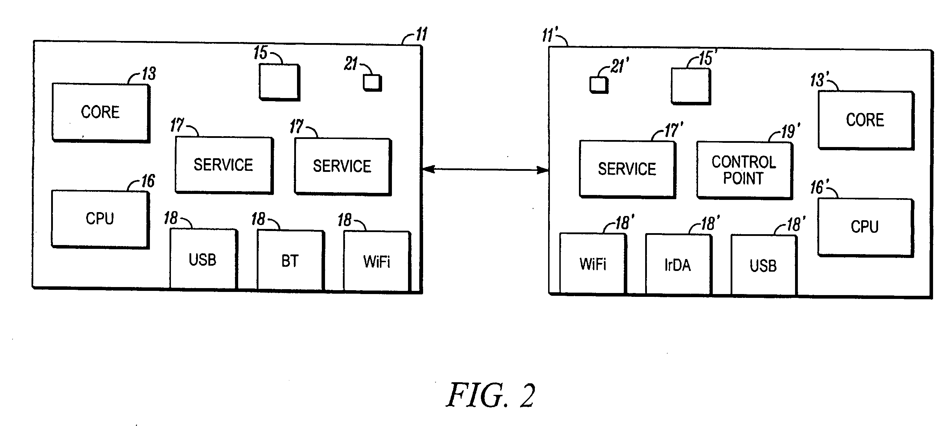

Fig. 2 shows a system in which a first device 11 and a second device 11' are provided and connected through a communication link 30. The communication link 30 is shown as a direct link, but it could also be a network link. Each device 11, 11' includes a plurality of components such as computer software and/or hardware components. A number of such components can be combined or divided. An exemplary component of each device 11, 11' employs and/or comprises a series of computer instructions written in or implemented with any of a number of programming languages, as will be appreciated by those skilled in the art.

In one example, the components include core logic 13, 13', memory 15, 15', CPUs 16, 16', services 17, 17', and interfaces 18, 18'. In addition, device 11' includes at least one client, which can also be referred to (e.g. in UPnP) as a control point 19'. Device 11 could also have one or more control points, but for ease of description, this is not shown in Fig. 2.

Core logic 13, 13' is shorthand to refer to the device specific hardware and/or software components that allow each device 11, 11' to perform its core function(s) (e.g. media player, mobile phone, etc.). For example, if device 11 were a mobile phone, then core logic 13 would include a transceiver, a microphone, speakers, etc. Memory 15, 15' is storage on which devices 11, 11' can store data (e.g. software, digital media, etc.). CPUs 16, 16' are the central processors that control the operation of each device 11, 11'.

Services 17, 17' are applications that devices 11, 11' can offer to other devices. Put simply, services 17, 17' provide functionality that other devices can use in accordance with the network protocol in use. A device 11, 11' can have one or more services 17, 17'. A device also could have no services and instead rely on the services of other devices.

The services can take many forms. In the interests of brevity, this application will not attempt to describe all of the available services with which the transport medium selection will work. Examples of services include file sharing, file synchronization, media rendering, and media streaming. There are also services that enable one device to control the most basic operations of another device. For instance, a DVD player may have a service allowing another device to change a disc or to eject a disc tray. The transport medium selection of the present application is compatible with any service that communicates some form of data to another device.

Interfaces 18, 18' provide devices 11, 11' with physical mediums by which the devices can communicate with each other and to other devices, either directly or through a network 20. Exemplary interfaces 18, 18' include, but are not limited to, USB, Bluetooth, IrDA, WiFi, IEEE 1394, etc. Fig. 2 depicts, for illustrative purposes, devices 11, 11' as each having three interfaces, but it will be appreciated that each device 11, 11' could have any number of interfaces 18, 18'.

Control point 19', allows a user to send actions to a service, either on device 11 or device 11'. Control point 19', for exemplary purposes, is shown as residing on device 11'. However, device 11 could also have one or more control points, or alternatively, a control point could reside on another device connected to the network 20.

Each device 11, 11' also employs at least one computer-readable signal-bearing medium 21, 21'. One example of a computer-readable signal-bearing medium 21, 21' is a recordable data storage medium such as a magnetic, optical, and/or atomic scale data storage medium. In another example, a computer-readable signal-bearing medium is a modulated carrier signal transmitted over a network coupled to the 11, 11' device. Each computer-readable signal-bearing medium 21, 21' can be used to store logic components or code elements that are employable to carry out transport medium selection described herein.

It should be noted that the preceding component descriptions are for illustrative purposes only. It is envisioned that the methodology disclosed herein can be performed on other devices with other configurations.

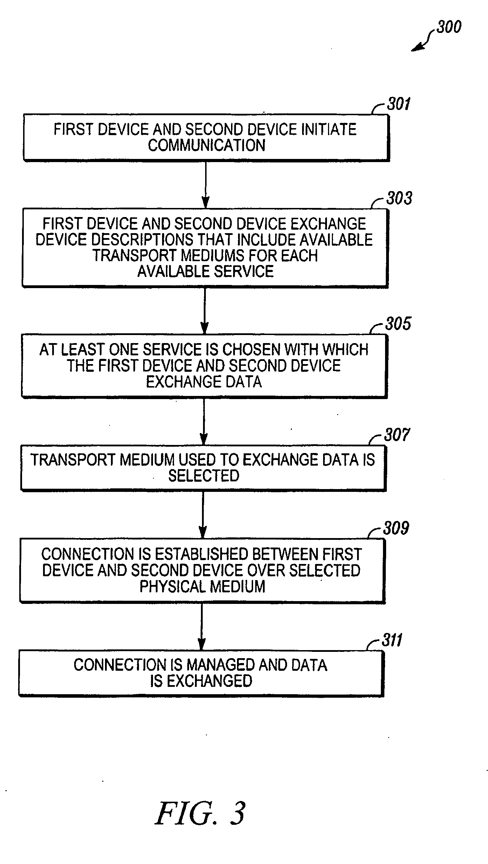

Referring to Fig. 3, an exemplary description of a process 300 for transport medium selection is provided for illustrative purposes. This application will describe devices 11, 11' as performing process for illustrative purposes. It will be apparent, however, that the process could also be performed by more than two devices.

The process 300 begins in step 301 during which the first device 11 and the second device 11' initiate communication. The communication can be initiated by device 11 coming within range of device 11' or joining a network on which device 11' resides. The communication could also be initiated by device 11' coming within range of device 11 or joining a network on which device 11 resides. Finally, device 11, 11' could initiate communication with each other in the course of initiating communication with a number of devices. For instance, if device 11 were to join a network of devices, which included device 11', then communication would be initiated between device 11 and device 11', but it would also be initiated between device 11 and the other devices on the network.

In one example, step 301 corresponds to the device discovery process set forth in accordance with the UPnPT^{™} Device Architecture specification, Version 1.0, which is hereby incorporated by reference and available from the UPnP^{™} forum. It will be appreciated that during this discovery process, when a device 11, 11' joins a network it broadcasts or advertises its presence to the other devices on a network. Similarly, when a control point 19' joins a network, it sends a multicast request to devices on the network to advertise their presence to the control point.

In any event, during step 301, the first device 11 and second device 11' exchange messages containing essential information about each other. For example, each device 11, 11' might provide its type, an identifier, and a pointer to more detailed information.

In step 303, the devices 11, 11' exchange device descriptions. In one example, the device descriptions are stored in the respective memories 15, 15' of each device 11, 11'. Device 11 sends a device description file to device 11' and device 11' sends a device description to device 11. Obviously, if one of the devices 11, 11' joins a network, the device descriptions will be sent to other devices on the network as well. The device descriptions include services that are available on each device for use by the other devices. The device descriptions will also include, for each service, all of the transport mediums that available for use.

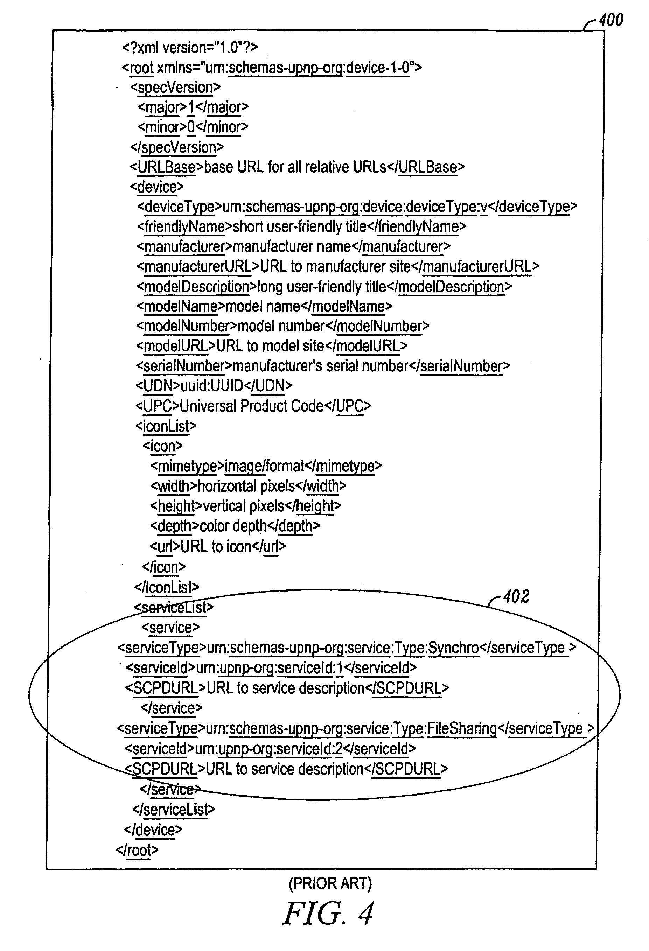

Fig. 4 depicts an exemplary device description 400 drafted in accordance with the UPnP protocol. The device description 400 is written in XML format and includes detailed information, such as the model name, model number, manufacturer, manufacturers URL, serial numbers, about the device. The device description 400 also includes a service list 402. The service list 402 identifies all of the services on the device that are available for use by other devices. For example, service list 402 identifies two services: file synchronization and file sharing. For each service, the service list 402 provides a URL to more detailed information about the particular service. The service list 402 also includes commands or actions to which the service responds and parameters or arguments for the service.

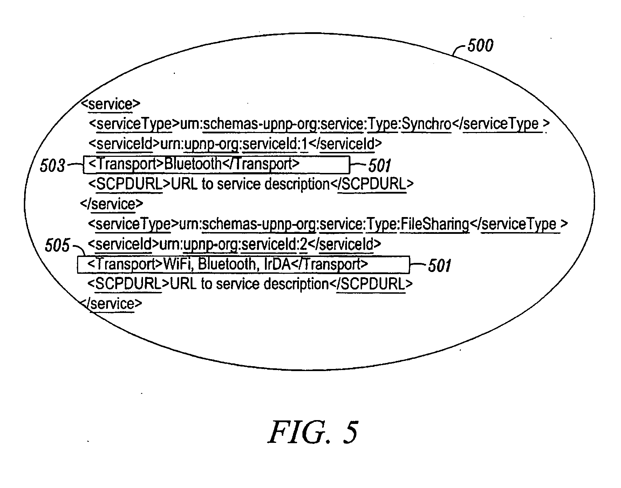

Referring to Fig. 5, in accordance with transport medium selection described herein, a service list 500 is shown in which a transport medium description 501 is added for each service identified in the service list 402 of Fig. 4. Specifically, for each available service, all of the available transport mediums are identified in the service list 500. For instance, the file synchronization service includes a transport medium description 503 that identifies Bluetooth as the only available transport medium for file synchronization. Similarly, the file sharing service includes a transport medium description 505 that specifies WiFi, Bluetooth, and IrDA as the only available transport mediums for file sharing.

The transport medium descriptions 501 can be created and added to the service list 500 in multiple ways. In one example, a user could enter transport medium descriptions 501 to a device description, either manually or through another application, such that the transport medium descriptions reflect the user's preferences. In another example, the transport medium descriptions could be added by automatically by an application. For instance, an application could identify all the available interfaces present on a device and add the corresponding transport mediums for each service listed in the service list 500. In a further example, an application or the user could define or select one or more parameters for each service and only allow transport mediums with parameter values reflecting certain predetermined criteria to operate with a particular service. For example, a user or application might decide that throughput is of paramount importance for a particular type of service and then evaluate whether the value of throughput for a particular transport medium exceeds a certain value. If it does, then that transport medium will be added to the transport medium description 501 for that particular service. If the value of throughput does not exceed the value, then the transport medium will not be added to the transport medium description 501. In another example, power consumption or quality of service could be the parameters by which the transport mediums are evaluated for a particular service. The parameters chosen by the application or user could relate to a combination of factors. For instance, a user, for a particular service, might only want to use the fastest transport medium, but only if power consumption is below a certain threshold.

In the example of UPnP, a specific application might always require the use of same transport. In this case the application asks the UPnP discovery-description to take into account this requirement and to fill out the xml device description file with the right information. If the interface network required by the application is not available, the application will be disabled. In a further example, on each embedded system, tools (ipconfig, ifconfig ...) can be used get information about the interface networks enabled on the Operating System. Following the results, the UPnP discovery-description mechanism can fill out the xml device description file.

To prevent confusion between devices, applications should avoid leaving any transport medium descriptions 501 blank. If a transport medium is not available for a particular service, then the service should not be offered to the network. Accordingly, in one example, the transport medium descriptions 501 will default to the physical medium used during the discovery phase.

In another example, the transport medium descriptions could be added to the UPnP service description file instead of the device description file. By adding the transport medium descriptions 501 to the device description files, however, devices avoid requesting service information if the transport required by the application is not supported.

These previous examples are provided for illustrative purposes only and should not be construed as limiting the range of alternatives by which the transport medium descriptions are created for each device.

In step 305, at least one of the available services is chosen by which the first device 11 and second device 11' will exchange data. The service(s) chosen will depend on the particular objective that the user invoking the service(s) wants to accomplish. For example, a user of the second device 11' might invoke, through control point 19', a file sharing service on device 11 and a file sharing service on device 11' to share files between devices 11, 11'. In another example, the second device 11' might be a media rendering device with an integrated control point 19' and the first device 11 might be a media server. The user, through control point 19', might choose to invoke a media streaming service on device 11 and render streamed media, from device 11, on device 11'. Accordingly, two services would work cooperatively to achieve the transfer of data.

In step 307, the transport medium used to exchange data is selected. Transport medium selection occurs in a manner similar to the manner in which each device constructs its transport medium descriptions. The selection of the transport medium could be performed by the first device 11, by the second device 11', or by a combination of the two devices. For instance, an application in device 11' might invoke a service, such as file sharing, on device 11 in order to transfer a particular file to device 11'. The application might only want to transfer the file, however, if there were a transport medium available that could meet one or more predetermined criteria, such as a certain rate of transfer, quality of service, or power consumption. Accordingly, if the device 11' were to determine that a plurality of transport mediums available use with a service on device 11' matched a plurality of services available for the service on device 11, then device 11' could select the best alternative based on the predetermined criteria.

For example, the controlling application could automatically select the transport medium that meets its application criteria and minimizes current drain. For instance, the chart below indicates that IEEE 802.15.1 has minimal current drain. Yet, if IEEE 802.15.1 does not meet other performance criteria, then the controlling application would select 802.15.3. If 802.15.3 does not meet other performance criteria, then the application would select 802.15.3.a, and so on.

| **IEEE** | 802.15.1 | 802.15.3 | 802.15.3.a | 802.11.b | 802.11.a |
|---|---|---|---|---|---|
| **Current Drain** | 100% | 260% | 330% | 1150% | 1150% |

In another example, relating to steps 303 and 307, it is envisioned that the respective manufacturers of devices 11 might create UPnP device descriptions 400 at the time of manufacture. The manufacturer would identify the transport mediums available for each service and assign a relative level of precedence for each transport medium. For example, if the manufacturer of device L1 were to provide a transport medium description 501 of {WiFi, Bluetooth, IrDA} for file sharing, then when invoking file sharing on device 11', device 11 would search the corresponding transport medium description on device 11' for WiFi. If WiFi were not present, device 11 would search for Bluetooth. If Bluetooth were not present, device 11 would search for IrDA.

In one embodiment provided herein, the user can change the transport medium description and reorder the relative level of precedence for the transport mediums identified supported for each service. If the user prefers Bluetooth over WiFi for file sharing, the user can reorder the transport medium description 501 to {Bluetooth, WiFi, IrDA}. Then, when invoking file sharing on device 11', device 11 would first determine whether Bluetooth were available for file sharing on device 11'. If Bluetooth were not available, device 11 would check if WiFi were available, and so on. Thus, for each service on a device 11, the user can not only describe what transport mediums are available, but also provide input into the selection criteria.

In step 309, a connection is established between the first device and the second device using the transport medium selected in step 307. Once the connection is established, then in step 311, the devices 11, 11' exchange data in accordance with the particular service or services chosen in step 305, and the connection is managed in accordance with the transport protocol in use.

Accordingly, what is provided is a methodology by which applications are given the choice of selecting a transport medium. Each device will broadcast its transport capabilities to the surrounding devices and receive broadcasts of the surrounding devices transport capabilities. Thus, each device on a network will always know the transport capabilities of the other devices. Each device will have a list transport mediums to perform applications, such as content sharing or synchronization. Devices that support multiple transports can select, for each application, only those transports that meet their application criteria and other predetermined criteria, such as minimizing current drain. The application layer can then utilize this information to select the most suitable physical medium to communicate, to share, or to exchange data.

While particular embodiments have been shown and described, it will be apparent to those skilled in the art that changes and modifications may be made without departing from the principles set forth herein. The matter set forth in the foregoing description and accompanying drawings is offered by way of illustration only and not as a limitation.

## Claims

1. A method of transport medium selection, the method comprising:
providing a first device (11) and a second device (11');
exchanging device (503) descriptions (400) between the first device (11) and the second device (11'), **characterised in that** each device description (400) identifies available services and all available transport mediums for each service;
choosing (305) at least one of the available services to exchange data between the first device (11) and the second device (11'); and
selecting (307) one of the available transport mediums to exchange data between the first device (11) and the second device (11').

2. The method of claim 1, wherein the step (303) of exchanging device descriptions (400) comprises:
sending a first device description from the first device (11) to the second device (11') that identifies all services that are available on the first device (11); and
sending a second device description from the second device (11') to the first device (11) that identifies all services that are available on the second device (11').

3. The method of claim 2, wherein the step of sending the first device description (400) comprises:
identifying all transport mediums that are available for use with each service on the first device (11); and
identifying all transport mediums that are available for use with each service on the second device (11').

4. The method of claim 1, further comprising:
creating a device description (400) for each device (11) by either designating all transport mediums present on device as available for use with each service on the device or designating only transport mediums present on the device that meet predetermined criteria as available for use with each service on the device.

5. The method of claim 4, wherein the step of creating device descriptions (400) comprises:
designating only transport mediums present on the device that meet predetermined criteria as available for use with each service on the device.

6. The method of claim 5, further comprising :
selecting at least one parameter related to at least one of power consumption, throughput, and quality of service; and
setting the predetermined criteria through employment of the at least one parameter.

7. The method of claim 4, wherein the step of creating the device description (400) for each device comprises:
creating an initial description for each device in accordance with the Universal Plug and Play specification; and
adding a descriptor to each initial description that identifies all available transport mediums for each service identified in the initial description.

8. The method of claim 1, wherein the step of choosing (305) at least one of the available services comprises:
choosing a service on the first device (11); and
choosing a service on the second device (11').

9. The method of claim 8, wherein the step of selecting (307) one of the available transport mediums comprises:
determining that a plurality of transport mediums available for the service chosen on the first device (11) match a plurality of transport mediums available for the service chosen on the second device (11'); and
employing predetermined criteria to select one of the plurality of available transport mediums.

10. The method of claim 9, wherein the step of employing predetermined criteria comprises:
setting the predetermined criteria to select at least one of: a first available matching transport medium of the plurality of available transport mediums, a transport medium that will minimize power consumption relative to the other transport mediums, a transport medium that will maximize throughput of data exchanged between the first device and the second device, and a transport medium that will maximize quality of service between the first device and the second device.

11. A method of identifying transport capabilities to a network, the method comprising:
initiating (301) communication with at least one device (11') on the network;
broadcasting a device description (400) to the at least one device (11');
**characterised in that** the device description (400) includes at least one service available to the network and all transport mediums available for use with the at least one service.

12. The method of claim 11, wherein the step of broadcasting the device description comprises:
broadcasting the device description such that it includes a plurality of services that are available to the at least one device and a list of transport mediums available for use with each of the plurality of services.

13. The method of claim 11, further comprising:
receiving (303) a device description from the at least one device on the network, wherein the received device description (400) includes at least one service available from the at least one device (11) and all transport mediums available for use with the at least one service.

14. The method of claim 13, wherein the step of receiving (303) the device description comprises:
receiving a plurality of services available from the at least one device and all transport mediums available for use with each of the services.

15. The method of claim 14, further comprising:
choosing (305) a service to exchange data with the at least one device;
determining predetermined criteria to select one of the available transport mediums; and
selecting one of the transport mediums based on the predetermined criteria.

16. A method of selecting a protocol for use in exchanging data with a device on a network, the method comprising:
receiving (303) a device description from the device, **characterised in that** the device description includes at least one service that can be used to exchange data with the device, and for each service included in the device description, all available transport mediums for use with the service; and
choosing a service to exchange data with the second device, and
selecting an available transport medium for use with service.

17. The method of claim 16, wherein the step of selecting an available transport medium comprises:
receiving input from a user; and
selecting the transport medium in accordance with the user input.

18. The method of claim 16, wherein the step of selecting an available transport medium comprises:
setting predetermined criteria for selecting a transport medium; and
employing the predetermined criteria to select the transport medium.

19. The method of claim 18, wherein the step of setting the predetermined criteria comprises:
selecting at least one parameter related to at least one of power consumption, throughput, and quality of service; and
setting the predetermined criteria through employment of the at least one parameter.

20. A wireless device (11) on a network, comprising:
a processor (16);
a transceiver; and
a memory component (15) that includes a description (400) of the device (11), **characterised in that** the description (400) includes at least one service that is available for use by other devices on the network, and for each service, a list of all transport mediums that are available for use with the service.

21. An article, comprising:
a computer-readable signal-bearing medium;
logic in the medium to provide a description of a device on a network,
**characterised in that** the description includes each service available to other devices on the network and available transport mediums for use with each service.

## Patentansprüche

1. Verfahren zur Auswahl von Transportmedien, umfassend:
Bereitstellen eines ersten Geräts (11) und eines zweiten Geräts (11'),
Austauschen von Beschreibungen (400) der Geräte (503) zwischen dem ersten Gerät (11) und dem zweiten Gerät (11'), **dadurch gekennzeichnet, daß** jede Gerätebeschreibung (400) verfügbare Dienste und alle für jeden Dienst verfügbaren Transportmedien identifiziert,
Wählen (305) mindestens eines der verfügbaren Dienste, um Daten zwischen dem ersten Gerät (11) und dem zweiten Gerät (11') auszutauschen, und
Auswählen (307) eines der verfügbaren Transportmedien, um Daten zwischen dem ersten Gerät (11) und dem zweiten Gerät (11') auszutauschen.

2. Verfahren nach Anspruch 1, wobei der Schritt (303) des Austauschens der Gerätebeschreibungen (400) umfaßt:
Senden einer ersten Gerätebeschreibung vom ersten Gerät (11) an das zweite Gerät (11'), die alle im ersten Gerät (11) zur Verfügung stehenden Dienste identifiziert, und
Senden einer zweiten Gerätebeschreibung vom zweiten Gerät (11') an das erste Gerät (11), die alle im zweiten Gerät (11') zur Verfügung stehenden Dienste identifiziert.

3. Verfahren nach Anspruch 2, wobei der Schritt des Sendens der ersten Gerätebeschreibung (400) umfaßt:
Identifizieren aller Transportmedien, die zum Einsatz mit jedem Dienst im ersten Gerät (11) zur Verfügung stehen, und
Identifizieren aller Transportmedien, die zum Einsatz mit jedem Dienst im zweiten Gerät (11') zur Verfügung stehen.

4. Verfahren nach Anspruch 1, ferner umfassend:
Erstellen einer Gerätebeschreibung (400) für jedes Gerät (11), indem entweder alle im Gerät vorhandenen Transportmedien als zum Einsatz mit jedem Dienst im Gerät zur Verfügung stehend designiert werden oder nur solche im Gerät vorhandenen Transportmedien als zum Einsatz mit jedem Dienst im Gerät zur Verfügung stehend designiert werden, die vordefinierten Kriterien entsprechen.

5. Verfahren nach Anspruch 4, wobei der Schritt des Erstellens von Gerätebeschreibungen (400) umfaßt:
Designieren nur solcher im Gerät vorhandenen Transportmedien als zum Einsatz mit jedem Dienst im Gerät zur Verfügung stehend, die vordefinierten Kriterien entsprechen.

6. Verfahren nach Anspruch 5, ferner umfassend:
Auswählen mindestens eines Parameters, der sich auf mindestens den Stromverbrauch, den Durchsatz und/oder die Dienstqualität bezieht, und
Einstellen der vordefinierten Kriterien unter Einsatz des mindestens einen Parameters.

7. Verfahren nach Anspruch 4, wobei der Schritt des Erstellens der Gerätebeschreibung (400) für jedes Gerät umfaßt:
Erstellen einer anfänglichen Beschreibung für jedes Gerät entsprechend der UPnP (Universal Plug and Play) Spezifikation und
Hinzufügen eines Descriptors zu jeder anfänglichen Beschreibung, welcher alle verfügbaren Transportmedien für jeden in der anfänglichen Beschreibung identifizierten Dienst identifiziert.

8. Verfahren nach Anspruch 1, wobei der Schritt des Wählens (305) mindestens eines der verfügbaren Dienste umfaßt:
Wählen eines Dienstes im ersten Gerät (11) und
Wählen eines Dienstes im zweiten Gerät (11').

9. Verfahren nach Anspruch 8, wobei der Schritt des Auswählens (307) eines der verfügbaren Transportmedien umfaßt:
Bestimmen, daß eine Mehrzahl von für den auf dem ersten Gerät (11) gewählten Dienst zur Verfügung stehenden Transportmedien mit einer Mehrzahl von Transportmedien übereinstimmen, die für den auf dem zweiten Gerät (11') gewählten Dienst zur Verfügung stehen, und
Verwenden der vordefinierten Kriterien, um eines aus der Mehrzahl von verfügbaren Transportmedien auszuwählen.

10. Verfahren nach Anspruch 9, wobei der Schritt des Verwendens der vordefinierten Kriterien umfaßt:
Einstellen der vordefinierten Kriterien, um mindestens eines der folgenden auszuwählen: ein erstes verfügbares übereinstimmendes Transportmedium aus der Mehrzahl der verfügbaren Transportmedien, ein Transportmedium, das im Verhältnis zu den anderen Transportmedien den Stromverbrauch minimiert, ein Transportmedium, das den Durchsatz der zwischen dem ersten und dem zweiten Gerät ausgetauschten Daten maximiert, und ein Transportmedium, das die Dienstqualität zwischen dem ersten und dem zweiten Gerät maximiert.

11. Verfahren zum Identifizieren der Transportmöglichkeiten für ein Netzwerk, umfassend:
Einleiten (301) der Kommunikation mit mindestens einem Gerät (11') im Netzwerk,
Übertragen einer Gerätebeschreibung (400) an das mindestens eine Gerät (11'), **dadurch gekennzeichnet, daß** die Gerätebeschreibung (400) mindestens einen dem Netzwerk zur Verfügung stehenden Dienst und alle zum Einsatz mit dem mindestens einen Dienst zur Verfügung stehenden Transportmedien beinhaltet.

12. Verfahren nach Anspruch 11, wobei der Schritt des Übertragens der Gerätebeschreibung umfaßt:
Übertragen der Gerätebeschreibung derart, dass sie eine Mehrzahl von Dienten, die dem mindestens einen Gerät zur Verfügung stehen, sowie eine Liste der Transportmedien, die zum Einsatz mit jedem der Mehrzahl von Diensten zur Verfügung stehen, enthält.

13. Verfahren nach Anspruch 11, ferner umfassend:
Empfangen (303) einer Gerätebeschreibung von dem mindestens einen Gerät im Netzwerk, wobei die empfangene Gerätebeschreibung (400) mindestens einen von dem mindestens einen Gerät (11) zur Verfügung gestellten Dienst sowie alle Transportmedien beinhaltet, die zum Einsatz mit dem mindestens einen Dienst zur Verfügung stehen.

14. Verfahren nach Anspruch 13, wobei der Schritt des Empfangens (303) der Gerätebeschreibung umfaßt:
Empfangen einer Mehrzahl der von dem mindestens einen Gerät zur Verfügung gestellten Dienste sowie aller zum Einsatz mit jedem der Dienste zur Verfügung stehenden Transportmedien.

15. Verfahren nach Anspruch 14, ferner umfassend:
Wählen (305) eines Dienstes, um Daten mit dem mindestens einen Gerät auszutauschen,
Bestimmen von vordefinierten Kriterien, um eines der verfügbaren Transportmedien auszuwählen, und
Auswählen eines der Transportmedien auf Basis der vordefinierten Kriterien.

16. Verfahren zum Auswählen eines Protokolls zum Einsatz beim Austauschen von Daten mit einem Gerät in einem Netzwerk, umfassend:
Empfangen (303) einer Gerätebeschreibung von dem Gerät, **dadurch gekennzeichnet, daß** die Gerätebeschreibung mindestens einen Dienst, der zum Austausch von Daten mit dem Gerät verwendet werden kann, sowie für jeden in der Gerätebeschreibung enthaltenen Dienst alle verfügbaren Transportmedien zum Einsatz mit dem Dienst beinhaltet, und
Wählen eines Dienstes, um Daten mit dem zweiten Gerät auszutauschen, und
Auswählen eines verfügbaren Transportmediums zum Einsatz mit dem Dienst.

17. Verfahren nach Anspruch 16, wobei der Schritt des Auswählens eines verfügbaren Transportmediums umfaßt:
Empfangen einer Eingabe von einem Benutzer und
Auswählen des Transportmediums entsprechend der Benutzereingabe.

18. Verfahren nach Anspruch 16, wobei der Schritt des Auswählens eines verfügbaren Transportmediums umfaßt:
Einstellen von vordefinierten Kriterien zum Auswählen eines Transportmediums und
Verwenden der vordefinierten Kriterien zum Auswählen des Transportmediums.

19. Verfahren nach Anspruch 18, wobei der Schritt des Einstellens der vordefinierten Kriterien umfaßt:
Auswählen mindestens eines Parameters, der sich auf mindestens den Stromverbrauch, den Durchsatz und/oder die Dienstqualität bezieht, und
Einstellen der vordefinierten Kriterien unter Verwendung des mindestens einen Parameters.

20. Drahtloses Gerät (11) in einem Netzwerk, umfassend:
einen Prozessor (16),
einen Sendeempfänger und
eine Speicherkomponente (15), die eine Beschreibung (400) des Geräts (11) beinhaltet, **dadurch gekennzeichnet, daß** die Beschreibung (400) mindestens einen Dienst, der anderen Geräten im Netzwerk zum Einsatz zur Verfügung steht, sowie für jeden Dienst eine Liste aller Transportmedien beinhaltet, die zum Einsatz mit dem Dienst zur Verfügung stehen.

21. Artikel, umfassend:
ein computerlesbares signalführendes Medium,
Logik in dem Medium, die eine Beschreibung eines Geräts in einem Netzwerk bereitstellt, **dadurch gekennzeichnet, daß** die Beschreibung jeden Dienst, der anderen Geräten im Netzwerk zur Verfügung steht, sowie die zum Einsatz mit jedem Dienst verfügbaren Transportmedien enthält.

## Revendications

1. Procédé de sélection de moyen de transport, le procédé comprenant :
la mise à disposition d'un premier dispositif (11) et d'un deuxième dispositif (11') ;
l'échange (503) de descriptions de dispositif (400) entre le premier dispositif (11) et le deuxième dispositif (11'), **caractérisé en ce que** chaque description de dispositif (400) identifie des services disponibles et tous les moyens de transport disponibles pour chaque service ;
le choix (305) d'au moins l'un des services disponibles pour l'échange de données entre le premier dispositif (11) et le deuxième dispositif (11') ; et
la sélection (307) de l'un des moyens de transport disponibles pour l'échange de données entre le premier dispositif (11) et le deuxième dispositif (11').

2. Procédé selon la revendication 1, dans lequel l'étape (303) d'échange de descriptions de dispositif (400) comprend :
l'envoi, par le premier dispositif (11) au deuxième dispositif (11'), d'une description de premier dispositif qui identifie tous les services qui sont disponibles sur le premier dispositif (11) ; et
l'envoi, par le deuxième dispositif (11') au premier dispositif (11), d'une description de deuxième dispositif qui identifie tous les services qui sont disponibles sur le deuxième dispositif (11').

3. Procédé selon la revendication 2, dans lequel l'étape d'envoi de la description de premier dispositif (400) comprend :
l'identification de tous les moyens de transport qui sont disponibles pour utilisation avec chaque service sur le premier dispositif (11) ; et
l'identification de tous les moyens de transport qui sont disponibles pour utilisation avec chaque service sur le deuxième dispositif (11').

4. Procédé selon la revendication 1, comprenant en outre :
la création d'une description de dispositif (400) pour chaque dispositif (11), par désignation de tous les moyens de transport présents sur le dispositif en tant que moyens disponibles pour utilisation avec chaque service sur le dispositif ou bien par désignation uniquement des moyens de transport présents sur le dispositif qui satisfont à des critères prédéterminés en tant que moyens disponibles pour utilisation avec chaque service sur le dispositif.

5. Procédé selon la revendication 4, dans lequel l'étape de création de descriptions de dispositif (400) comprend :
la désignation uniquement des moyens de transport présents sur le dispositif qui satisfont à des critères prédéterminés en tant que moyens disponibles pour utilisation avec chaque service sur le dispositif.

6. Procédé selon la revendication 5, comprenant en outre :
la sélection d'au moins un paramètre relatif à au moins l'un parmi : la consommation d'énergie, le rendement et la qualité de service ; et
la définition des critères prédéterminés par utilisation de l'au moins un paramètre.

7. Procédé selon la revendication 4, dans lequel l'étape de création de la description de dispositif (400) pour chaque dispositif comprend :
la création d'une description initiale pour chaque dispositif selon la spécification UPnP ("*Universal Plug and Play*") ; et
l'ajout à chaque description initiale d'un descripteur qui identifie tous les moyens de transport disponibles pour chaque service identifié dans la description initiale.

8. Procédé selon la revendication 1, dans lequel l'étape de choix (305) d'au moins l'un des services disponibles comprend :
le choix d'un service sur le premier dispositif (11) ; et
le choix d'un service sur le deuxième dispositif (11').

9. Procédé selon la revendication 8, dans lequel l'étape de sélection (307) de l'un des moyens de transport disponibles comprend :
la détermination du fait qu'une pluralité de moyens de transport disponibles pour le service choisi sur le premier dispositif (11) correspond à une pluralité de moyens de transport disponibles pour le service choisi sur le deuxième dispositif (11') ; et
l'utilisation des critères prédéterminés pour la sélection de l'un de la pluralité de moyens de transport disponibles.

10. Procédé selon la revendication 9, dans lequel l'étape d'utilisation des critères prédéterminés comprend :
la définition des critères prédéterminés pour la sélection d'au moins l'un parmi : un premier moyen de transport correspondant disponible de la pluralité de moyens de transport disponibles, un moyen de transport qui minimisera la consommation d'énergie par rapport aux autres moyens de transport, un moyen de transport qui maximisera le rendement des données échangées entre le premier dispositif et le deuxième dispositif, et un moyen de transport qui maximisera la qualité de service entre le premier dispositif et le deuxième dispositif.

11. Procédé d'identification de capacités de transport vers un réseau, le procédé comprenant :
le démarrage (301) d'une communication avec au moins un dispositif (11') sur le réseau ;
la radiodiffusion d'une description de dispositif (400) vers l'au moins un dispositif (11') ;
**caractérisé en ce que** la description de dispositif (400) inclut au moins un service disponible pour le réseau et tous les moyens de transport disponibles pour utilisation avec l'au moins un service.

12. Procédé selon la revendication 11, dans lequel l'étape de radiodiffusion de la description de dispositif comprend :
la radiodiffusion de la description de dispositif de telle sorte qu'elle inclue une pluralité de services qui sont disponibles pour l'au moins un dispositif et une liste des moyens de transport disponibles pour utilisation avec chaque service de la pluralité de services.

13. Procédé selon la revendication 11, comprenant en outre :
la réception (303) d'une description de dispositif en provenance de l'au moins un dispositif sur le réseau, la description de dispositif (400) reçue incluant au moins un service disponible auprès de l'au moins un dispositif (11) et tous les moyens de transport disponibles pour utilisation avec l'au moins un service.

14. Procédé selon la revendication 13, dans lequel l'étape de réception (303) de la description de dispositif comprend :
la réception d'une pluralité de services disponibles auprès de l'au moins un dispositif et de tous les moyens de transport disponibles pour utilisation avec chacun des services.

15. Procédé selon la revendication 14, comprenant en outre :
le choix (305) d'un service pour l'échange de données avec l'au moins un dispositif ;
la détermination de critères prédéterminés pour la sélection de l'un des moyens de transport disponibles ; et
la sélection de l'un des moyens de transport en fonction des critères prédéterminés.

16. Procédé de sélection d'un protocole à utiliser pour l'échange de données avec un dispositif sur un réseau, le procédé comprenant :
la réception (303) d'une description de dispositif en provenance du dispositif, **caractérisé en ce que** la description de dispositif inclut au moins un service qui peut être utilisé pour l'échange de données avec le dispositif et, pour chaque service inclus dans la description de service, tous les moyens de transport disponibles pour utilisation avec le service ; et
le choix d'un service pour l'échange de données avec le deuxième dispositif ; et
la sélection d'un moyen de transport disponible pour utilisation avec le service.

17. Procédé selon la revendication 16, dans lequel l'étape de sélection d'un moyen de transport disponible comprend :
la réception d'une entrée fournie par un utilisateur ; et
la sélection du moyen de transport en fonction de l'entrée fournie par l'utilisateur.

18. Procédé selon la revendication 16, dans lequel l'étape de sélection d'un moyen de transport disponible comprend :
la définition de critères prédéterminés pour la sélection d'un moyen de transport ; et
l'utilisation des critères prédéterminés pour la sélection du moyen de transport.

19. Procédé selon la revendication 18, dans lequel l'étape de définition des critères prédéterminés comprend :
la sélection d'au moins un paramètre relatif à au moins l'un parmi : la consommation d'énergie, le rendement et la qualité de service ; et
la définition des critères prédéterminés par utilisation de l'au moins un paramétre.

20. Dispositif sans fil (11) sur un réseau, comprenant :
un processeur (16) ;
un émetteur-récepteur ; et
un composant de mémoire (15) qui inclut une description (400) du dispositif (11), **caractérisé en ce que** la description (400) inclut au moins un service qui est disponible pour utilisation par d'autres dispositifs sur le réseau et, pour chaque service, une liste de tous les moyens de transport qui sont disponibles pour utilisation avec le service.

21. Article comprenant :
un moyen d'acheminement de signal lisible par un ordinateur ;
une logique comprise dans le moyen pour fournir une description d'un dispositif sur un réseau, **caractérisé en ce que** la description inclut chaque service disponible pour les autres dispositifs sur le réseau et les moyens de transport disponibles pour utilisation avec chaque service.
